# EUROPEAN PATENT SPECIFICATION

(11) **EP 3 244 412 B1**
(45) Date of publication and mention of the grant of the patent: **27.01.2021**
(21) Application number: 17170067.7
(22) Date of filing: 09.05.2017
(51) Int. Cl.: G11B 27/30, G11B 27/10, G06F 3/16

(54) **STORAGE DEVICE, REPRODUCTION PROCESS DEVICE, OPERATION CONTROL METHOD FOR REPRODUCTION PROCESS DEVICE, AND PROGRAM**
SPEICHERUNGSVORRICHTUNG, WIEDERGABEVERARBEITUNGSVORRICHTUNG, BETRIEBSSTEUERUNGSVERFAHREN FÜR DIE WIEDERGABEVERARBEITUNGSVORRICHTUNG UND PROGRAMM
DISPOSITIF DE MÉMORISATION, DISPOSITIF DE TRAITEMENT DE REPRODUCTION, PROCÉDÉ DE COMMANDE DE FONCTIONNEMENT DE DISPOSITIF DE TRAITEMENT DE REPRODUCTION ET PROGRAMME

(30) Priority: 11.05.2016 JP 2016095216
(43) Date of publication of application: 15.11.2017
(73) Proprietor: Buffalo Inc., Nagoya-shi, Aichi 460-8315 (JP)
(72) Inventor: Matsumura, Masato, Nagoya-shi, Aichi 460-8315 (JP)
(74) Representative: Epping - Hermann - Fischer

(56) References cited:
- EP-A1- 1 487 177
- EP-A2- 1 087 557
- US-A1- 2016 086 611
- Anonymous: "Audio Playback Options - JRiverWiki", , 17 April 2014 (2014-04-17), XP055411859, Retrieved from the Internet: URL:https://wiki.jriver.com/index.php/Audi o_Playback_Options [retrieved on 2017-10-02]
- Anonymous: "Schiit Audio, Headphone amps and DACs made in USA.", , 10 December 2015 (2015-12-10), XP055411866, Retrieved from the Internet: URL:https://web.archive.org/web/2015121017 3532/http://www.schiit.com/guides/dsd-setu p [retrieved on 2017-10-02]

## Description

### Technical Field

The present invention relates to a storage device for storing content data, a reproduction process device for outputting content data to an external reproducing device, and an operation control method for the reproduction process device, and a program.

### Background Art

When consecutively reproducing a plurality of music data which are digital content data and have different feature data such as sampling rates, a Digital-to-Analog Converter (DAC) included in a reproducing device needs to recognize the feature data and change internal processes and the like. The changing process of the DAC needs a certain length of time. Therefore, there may occur a phenomenon, so-called "head omission", in which an D/A conversion on the head portions of music data having different sampling rates cannot keep up with the sampling rates, so that the head portions are not reproduced. For this reason, there have been proposed techniques for inserting soundless data at the beginning of music reproduction if feature data such as a sampling rate of music data is different from feature data of previous reproduction object music data (for example, JP-A-2006-26958, JP-A-2003-115169, JP-A-2009-277278, JP-A-2001-94448 or EP 1 087 557 A2).

Meanwhile, there is known a configuration in which a DAC is connected to a storage device which stores signals of music data having a Direct Stream Digital (DSD) format, and music data having the DSD format is supplied to the DAC and is converted into analog music data, and the analog music data is reproduced by a reproducing device. As an example of such a storage device, there is known a storage device which has a port based on a Universal Serial Bus (USB) standard and outputs music data having the DSD format through a DAC connectable to the USB port, i.e. a so-called USB-DAC (see, for example, "fidata" (for the ultimate in audio quality, from a brand that lives up to the meaning of its name: "reliability") on the Internet URL http://www.iodata.jp/fidata/index.htm (searched on May 10, 2016)).

In the case of outputting music data having the DSD format through the USB port, there is no standard defined for outputting music data having the DSD format in the USB standard. Therefore, the storage device outputs music data having the DSD format based on a standard called DSD Audio over PCM flames (DoP) in compliance with a Pulse Code Modulation (PCM) data format defined in the USB standard. The following prior art documents disclose use and set-up of DoP format to output audio data over USB-DAC : US 2016/086611, Anonymous: "Audio Playback Options - JRiverWiki", 17 April 2014 ,Retrieved from the Internet:URL:https://wiki.jriver.com/index.php/Audio_Playback_Options, Anonymous: "Schiit Audio, Headphone amps and DACs made in USA.",, 10 December 2015 (2015-12-10), Retrieved from the Internet:URL:https://web.archive.org/web/20151210173532/ http://www.schiit.com/guides/dsd-setup.

### Summary of Invention

It is known in the USB-DAC capable of reproducing music data based on the DoP format that after reproduction of music data is stopped (or paused), if the music data is reproduced again, noise called pop noise is generated at the beginning of the reproduction of the music data. The reason is that the output level of the music data having the DSD format becomes unstable when the reproduction is stopped, and thereafter, if the USB-DAC receives DSD data having a predetermined level, noise based on the level difference is generated. Therefore, some USB-DACs do not output sound (mute sound) for a predetermined length of time if the USB-DAC detects that music data based on the DoP format is inputted after stop of reproduction.

However, such muting operation of the USB-DAC causes the so-called "head omission" of music data having the DoP format, and thus, some measures are required.

The present invention has been made in view of the above-described circumstances, and an object of the present invention is to provide a storage device, a reproduction process device, an operation control method for the reproduction process device, and a program as defined in the claims which are capable of preventing head omission when content data is outputted to an external reproducing device.

According to an example, there is provided a reproduction process device including an input unit configured to receive a reproduction instruction of content data, and a reproducing unit configured to output the content data to an external reproducing device based on the reproduction instruction received by the input unit. The reproducing unit includes an acquiring unit configured to acquire a sampling rate of the content data which is an object of the reproduction instruction received by the input unit, as a first sampling rate, a notifying unit configured to notify the first sampling rate acquired by the acquiring unit to the external reproducing device, and a data control unit configured to output reproduction start notification data to the external reproducing device after the notifying unit notifies the first sampling rate, then output soundless data corresponding to a predetermined length of time to the external reproducing device, and thereafter, output the content data which is the object of the reproduction instruction received by the input unit, to the external reproducing device.

The data control unit outputs reproduction start notification data to the external reproducing device after the notifying unit notifies the first sampling rate, then outputs soundless data corresponding to a predetermined length of time to the external reproducing device, and thereafter, outputs the content data which is the object of the reproduction instruction received by the input unit, to the external reproducing device. Therefore, it is possible to output the content data after the external reproducing device finishes muting operation.

In the above reproduction process device, the reproducing unit may further include a storage unit configured to store a sampling rate of content data outputted from the reproducing unit immediately before the reproduction instruction received by the input unit, as a second sampling rate, and a determining unit configured to determine whether the first sampling rate and the second sampling rate are different, and if the determining unit determines that the first sampling rate and the second sampling rate are different from each other, the data control unit may output the reproduction start notification data to the external reproducing device after the notifying unit notifies the first sampling rate, then outputs the soundless data corresponding to the predetermined length of time to the external reproducing device, and thereafter, output the content data which is the object of the reproduction instruction received by the input unit, to the external reproducing device.

In the above reproduction process device, when the input unit receives a reproduction stop instruction of currently reproduced content data, the data control unit may perform an operation of resetting the entire reproducing unit, and when the input unit receives a reproduction restart instruction of the content data, the data control unit may output the reproduction start notification data to the external reproducing device after the notifying unit notifies the first sampling rate, then output the soundless data corresponding to the predetermined length of time to the external reproducing device, and thereafter, output, to the external reproducing device, the content data which is an object of the reproduction restart instruction received by the input unit.

In the above reproduction process device, the input unit may receive a setting instruction related to the predetermined length of time, and the data control unit may output, to the external reproducing device, the soundless data corresponding to the predetermined length of time whose length is based on the setting instruction received by the input unit.

In this case, the input unit may present candidates for the predetermined length of time and receive one of the presented candidates as the setting instruction.

In the above reproduction process device, the data control unit may output offset data representing a data output position of the content data which is being outputted, together with the content data, and the offset data may represent a data output position of the data excluding the soundless data.

In the above reproduction process device, the data control unit may output time stamp data representing a data reproduction time of the content data which is being outputted, together with the content data, and the time stamp data may represent the data reproduction time of the content data plus the soundless data.

In the above reproduction process device, the data control unit may check whether the content data which is the object of the reproduction instruction received by the input unit has a predetermined format, and if checking that the content data has the predetermined format, the data control unit may output the reproduction start notification data to the external reproducing device, then output the soundless data corresponding to the predetermined length of time to the external reproducing device, and thereafter, output to the external reproducing device the content data which is the object of the reproduction instruction received by the input unit.

In this case, the predetermined format may be a Direct Stream Digital (DSD) format.

In the above reproduction process device, the data control unit may output the content data in a DSD Audio over PCM flames (DoP) format to the external reproducing device.

In the above reproduction process device, the content data may be stored in an external storage device.

According to another example, there is provided a storage device including a storing unit configured to store the content data, and the above reproduction process device. This constitution may solve at least one of the problems mentioned above.

According to a further example, there is provided an operation control method for a reproduction process device which includes an input unit configured to receive a reproduction instruction of content data, and a reproducing unit configured to output the content data to an external reproducing device based on the reproduction instruction received by the input unit. The method includes acquiring a sampling rate of the content data which is an object of the reproduction instruction received by the input unit, as a first sampling rate, notifying the acquired first sampling rate to the external reproducing device, and after notification of the first sampling rate, outputting reproduction start notification data to the external reproducing device, then outputting soundless data corresponding to a predetermined length of time to the external reproducing device, and thereafter, outputting the content data which is the object of the reproduction instruction received by the input unit, to the external reproducing device.

According to a further example, there is provided a program which can be executed by a computer including an input unit configured to receive a reproduction instruction of content data, and a reproducing unit configured to output the content data to an external reproducing device based on the reproduction instruction received by the input unit. When the program is executed by the computer, the program causes the reproducing unit of the computer to function as an acquiring unit configured to acquire a sampling rate of the content data which is an object of the reproduction instruction received by the input unit, as a first sampling rate, a notifying unit configured to notify the first sampling rate acquired by the acquiring unit to the external reproducing device, and a data control unit configured to output reproduction start notification data to the external reproducing device after the notifying unit notifies the first sampling rate, then output soundless data corresponding to a predetermined length of time to the external reproducing device, and thereafter, output the content data which is the object of the reproduction instruction received by the input unit, to the external reproducing device. As a result, this constitution may solve at least one of the problems mentioned above.

According to a further example, there is provided a computer-readable data carrier including the above program.

According to the present invention, it is possible to provide a storage device, a reproduction process device, an operation control method for the reproduction process device, and a program which can prevent head omission when content data are outputted to an external reproducing device. The present invention is defined in the appended independent claims related to a reproduction process device according to claim 1, a control method for a reproduction process according to claim 10, a program according to claim 11 and a computer readable data carrier according to claim 12. Adavantageous aspects are further defined in the dependent claims.

### Brief Description of Drawings

FIG. 1 is a general view of a content reproducing system including a storage device according to an embodiment of the present invention.
FIG. 2 is a block diagram of the storage device according to the embodiment.
FIG. 3 is a functional block diagram of the storage device according to the embodiment to be used during the reproduction of music data having DSD format.
FIG. 4 is a functional block diagram of the storage device according to the embodiment.
FIGS. 5A and 5B illustrate the data structure of a content file having DoP format.
FIG. 6 is a sequence diagram for explaining an example of an operation of the storage device according to the embodiment.
FIG. 7 is a sequence diagram for explaining another example of the operation of the storage device according to the embodiment.
FIG. 8 is a sequence diagram for explaining a further example of the operation of the storage device according to the embodiment.
FIG. 9 is a flow chart for explaining the operation of the storage device according to the embodiment.
FIG. 10 is a flow chart for explaining the operation of the storage device according to the embodiment, as an additional part of Fig. 9.
FIG. 11 is a flow chart for explaining the operation of the storage device according to the embodiment, as another additional part of Fig. 9.

### Description of Embodiments

Hereinafter, an embodiment of a storage device of the present invention will be described with reference to the accompanying drawings.

### (Embodiment)

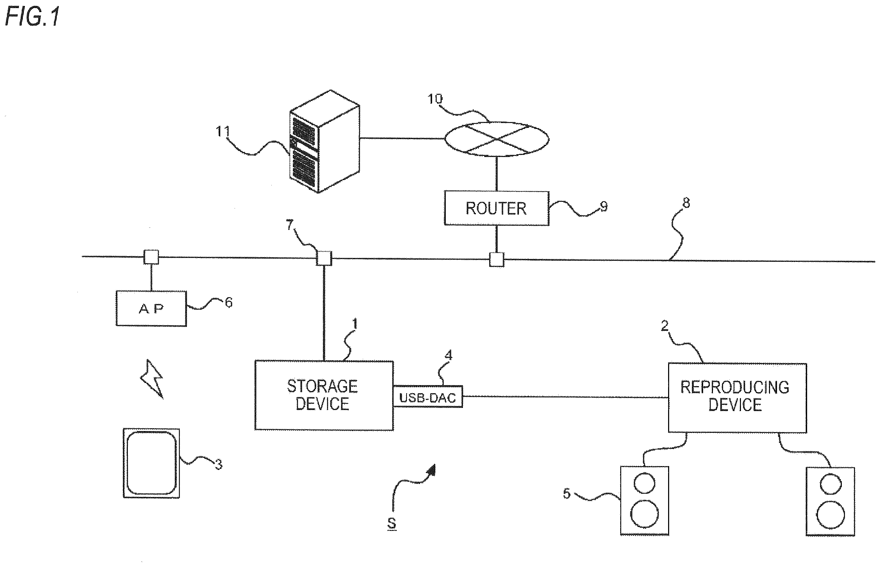

FIG. 1 shows a general view of a content reproducing system which is an embodiment of the present invention. In FIG. 1, a content reproducing system S of the embodiment includes a storage device 1, a reproducing device 2, and a communication device 3.

The storage device 1 includes a storage unit which stores content data, an input unit which receives instructions for reproducing content data stored in the storage unit, and a transmitting unit which transmits content data based on reproduction instructions received by the input unit, as will be described below in detail. The storage device 1 is, for example, a Network Attached Storage (NAS) or a Personal Computer (PC).

The storage device 1 of the present embodiment has a USB connector (not shown in FIG. 1) to which a USB-DAC 4 is connected. The content data stored in the storage unit of the storage device 1 is outputted to the USB-DAC 4 through the USB connector and subjected to D/A conversion in the USB-DAC 4, and is outputted, as analog content data reproducible in the reproducing device 2, to the reproducing device 2. Details of the storage device 1 will be described below.

The following description will be made with music data taken as an example of content data. However, content data which can be stored in the storage device of the present invention are not limited to music data and may be video data and still image data. Also, in the present invention, content data is stored as a content file in the storage unit as will be described below. Therefore, in the following description, content data and content files are interpreted synonymously unless they are specifically distinguished.

The reproducing device 2 receives analog content data from the USB-DAC 4, and transmits sound reproduction signals to a sound output device 5 such as a speaker connected to the reproducing device 2 based on the analog content data, such that the content data are reproduced by the sound output device 5. The reproducing device 2 is, for example, an analog audio amplifier. Details of the reproducing device 2 also will be described below.

The communication device 3 is a device capable of wireless communication with a wireless Access Point (AP) 6. Examples of the communication device 3 include smart phones and tablet terminals.

The storage device 1 is connected to a Local Area Network (LAN) 8 via a relay device 7 such as a switching hub. The communication device 3 is connected to the LAN 8 via the wireless access point 6 and the relay device 7. The LAN 8 is connected to a Wide Area Network (WAN) 10 such as the Internet via a router 9. Therefore, the storage device 1 and the communication device 3 can perform data communication with each other. The storage device 1 and the communication device 3 can also perform data communication with an external server 11 existing on the WAN 10.

### (Configuration of Storage Device)

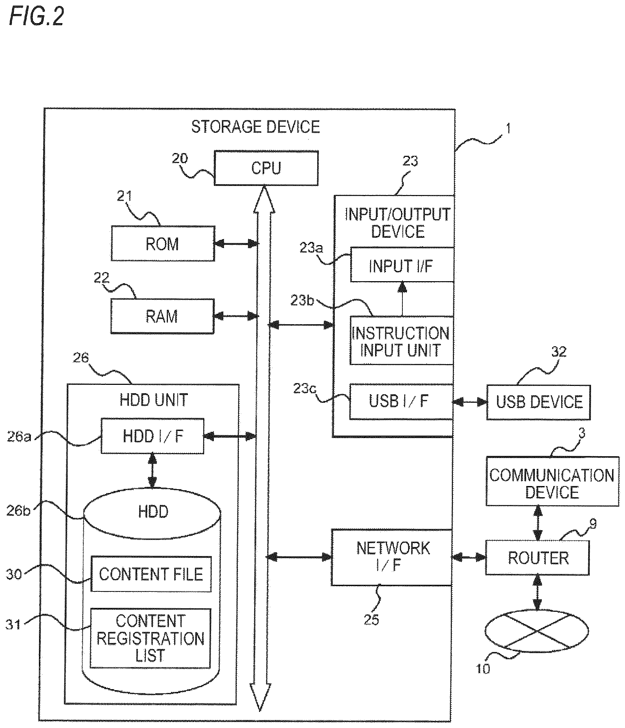

FIG. 2 is a block diagram of the storage device 1 according to the embodiment of the present invention. In FIG. 2, the storage device 1 of the present embodiment includes a Central Processing Unit (CPU) 20, a Read Only Memory (ROM) 21, a Random Access Memory (RAM) 22, an input/output device 23, a network interface (I/F) 25, and a Hard Disk Drive (HDD) unit 26, and these components are connected to one another by a bus.

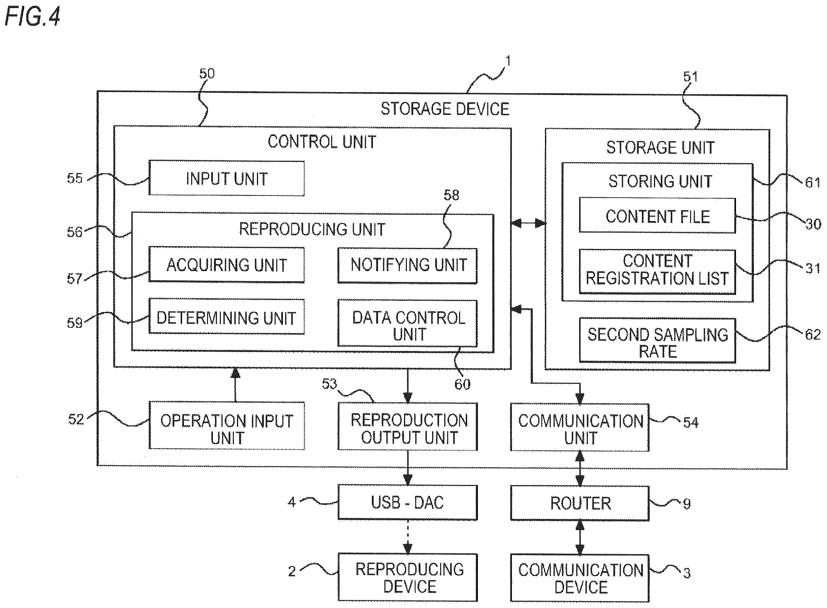

The CPU 20 controls the whole of the storage device 1 by executing programs such as firmware stored in the ROM 21 (described below). Also, the CPU 20 operates as each of function units as shown in FIG. 4, by executing programs stored in the ROM 21. Operations of the individual function units shown in FIG. 4 will be described below. In the ROM 21, the above described programs such as firmware are stored in advance. The RAM 22 serves as a work memory in the storage device 1. In this RAM, programs, data, and the like which are temporarily usable when the storage device 1 including the CPU 20 operates are stored.

The input/output device 23 includes an input interface (I/F) 23a, an instruction input unit 23b, and a USB interface (I/F) 23c.

The input interface 23a is connected to the instruction input unit 23b, and the input interface 23a receives an input signal based on a user's operation on the instruction input unit 23b. For example, in the case where the storage device 1 is NAS, the instruction input unit 23b may include various buttons for issuing various instructions such as a file acquisition instruction, an external-reproducing-device removal instruction, an operation state display instruction, and a storage device reset instruction.

The USB interface 23c has a USB connector (not shown), and writes data in a USB device 32 connected to the USB connector directly or by USB cables, or reads data out of the USB device, according to the standard of USB 2.0 or USB 3.0. Examples of the USB device 32 include various devices, such as a USB flash memory, an HDD device having a USB interface, and a keyboard, besides the USB-DAC 4.

The network interface 25 has a network connector (not shown), and the router 9 is connected to that network connector by a network cable (not shown). As a result, the storage device 1 and the communication device 3 can perform data communication with each other through the network interface 25 and the router 9. Also, if the router 9 is connected to the WAN 10, the storage device 1 can perform data communication with external networks. The network interface 25 is an interface for performing wired communication based on, for example, the standard of 802.3 of the Institute of Electrical and Electronics Engineers (IEEE).

The HDD unit 26 includes an HDD interface (I/F) 26a and an HDD 26b. The HDD 26b includes a disk (not shown) which is a recording medium, a rotator (not shown) for rotating the disk, and a head unit (not shown) for writing data on the disk or reading data out of the disk. If a command for writing data on the disk 26b or reading data out of the disk is issued, the HDD interface 26a controls the whole of the HDD 26b while performing data write or read control. If any data is read, the HDD interface outputs the read data. Also, the HDD 26b stores content files 30 and a content registration list 31. In FIG. 2, only one content file 30 is shown. However, in the present embodiment, a plurality of content files 30 may be stored in the HDD 26b.

### (Functional Components of Storage Device)

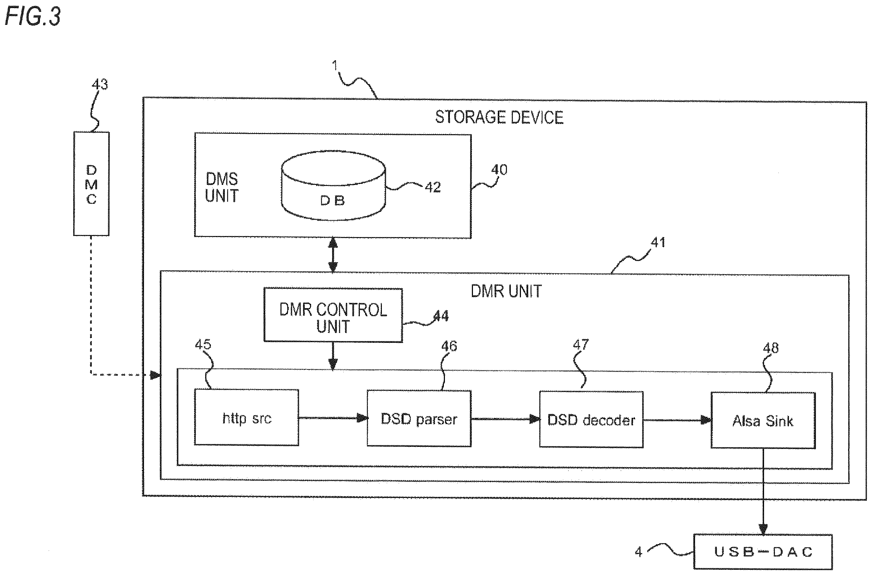

FIG. 3 is a functional block diagram of the storage device according to the embodiment of the present invention, adapted for the reproduction of music data having the DSD format. The functional block diagram of FIG. 3 shows functions which are performed according to Digital Living Network Alliance (DLNA) (registered as a trade mark) guidelines if the content file 30 shown in FIG. 2 is a music file having the DSD format.

The storage device 1 of the present embodiment includes a Digital Media Server (DSM) unit 40 and a Digital Media Renderer (DMR) unit 41 according to the DLNA guidelines. According to the guidelines of the DLNA which is a standard for establishing a home network using various devices such as AV devices, PCs, and mobile devices, content files 30 including photos, music, and videos are stored in a DB 42 included in the DMS unit 40, and a content list is managed in a structure having a folder hierarchy called a content directory (Content Directory Service (CDS)). Content files 30 which are managed in the CDS have ID values for uniquely identifying the individual content files 30, and Uniform Resource Identifiers (URIs) representing the sources of the content files 30 and metadata which are detailed information on the content files 30. The CDS is disclosed to other devices on the network, and a client device for performing content reproduction selects a content from the CDS on the DMS unit 40, and acquires content data represented by the URI of the content from the DB 42 of the DMS unit 40, and reproduces the content data. In this case, as a protocol for communication between the DMS unit 40 and the client device, Hypertext Transfer Protocol (HTTP) can be used.

According to the DLNA guidelines, a Digital Media Controller (DMC) 43 which is a type of client device and is configured by, for example, the communication device 3 searches for the DMS unit 40 existing on the network, and acquires CDS information, for example, the content list, and displays the acquired CDS information on a screen such that browsing is possible. A user browses the content list, and selects a desired content file 30 to be reproduced. The DMR unit 41 requests the DMR unit 41 to reproduce and output the content file 30 selected by the user, and the DMR unit 41 instructs the DMS unit 40 to transmit the content file 30, and reproduces content data transmitted from the DMS unit 40.

The DMR unit 41 of the present invention includes a DMR control unit 44, an http src unit 45, a DSD parser unit 46, a DSD decoder unit 47, and an Alsa Sink unit 48.

The DMR control unit 44 receives a content reproduction instruction from the DMC 43, and issues operation commands (described below) to the http src unit 45, the DSD parser unit 46, the DSD decoder unit 47, and the Alsa Sink unit 48, and controls them.

The http src unit 45 receives content files 30 from the DMS unit 40, and outputs the content files 30 to the DSD parser unit 46 at the next stage. The DSD parser unit 46 parses (i.e. makes syntax analysis of) the content files 30 of the DSD format outputted from the http src unit 45, and outputs the content files in an x-dsd format. The DSD decoder unit 47 decodes the inputs of the x-dsd format, and outputs the content files in an x-raw (DoP) format. Then, the Alsa Sink unit 48 negotiates with the USB-DAC 4, related to a variety of information such as information on sampling rates, channels, and formats, and transmits the outputs from the DSD decoder unit 47 to the USB-DAC 4.

FIG. 4 is a block diagram of the storage device 1 according to the present embodiment. The storage device 1 of the present embodiment includes a control unit 50, a storage unit 51, an operation input unit 52, a reproduction output unit 53, and a communication unit 54.

The control unit 50 controls the whole of the storage device 1. Particularly, the control unit 50 has the function of controlling the storage device 1 such that the storage device 1 operates as a DMS and a DMR according to the DLNA guidelines as described above. The control unit 50 includes an input unit 55 and a reproducing unit 56.

The input unit 55 receives instructions for reproducing content files 30 stored in a storing unit 61 (described below) of the storage unit 51. Here, reproduction instructions include an instruction for reproducing a content file 30, which is a music file, from its beginning, and an instruction for reproducing a content file 30 from a stop/pause position after the reproducing unit 56 has stopped or paused the output of the content file 30 in response to a stop/pause instruction received during reproduction of the content file 30.

In the case where content files 30 are stored in a so-called album format in the storing unit 61, that is, a plurality of content files 30 are stored as one reproduction unit, an instruction for reproducing content files stored in the album format is also included in reproduction instructions. In this case, reproduction instructions which the input unit 55 receives include an instruction for reproducing, from the beginning, the music of the content file 30 to be reproduced first within the album, and an instruction for preparing the reproduction of a content file 30 to be reproduced next when the end of ongoing reproduction of the current content file 30 approaches its end.

The reproducing unit 56 outputs content files 30 to an external reproducing device based on reproduction instructions received by the input unit 55. In the present embodiment, the reproducing unit 56 mainly outputs content files 30 to the USB-DAC 4 connected to the USB connector of the storage device 1, but it may output content files to other external reproducing devices. Also, the reproducing unit 56 may output content files 30 (more specifically, content data) to an external reproducing device, according to the format of the content files 30 and the performance of the external reproducing device, and may convert content files 30 into data having a format reproducible in an external reproducing device, and output the data.

The reproducing unit 56 includes an acquiring unit 57, a notifying unit 58, a determining unit 59, and a data control unit 60.

The acquiring unit 57 acquires the sampling rate of a content file 30 which is the object of a reproduction instruction received by the input unit 55, as a first sampling rate. Since many music files having various formats including the DSD format have sampling rate information described in their header portions, the acquiring unit 57 reads the header portion of the content file 30 which is the object of the reproduction instruction, thereby acquiring the sampling rate of the content file 30 as the first sampling rate. It may be preferable to temporarily store the first sampling rate acquired by the acquiring unit 57 in the storage unit 51.

The notifying unit 58 notifies the first sampling rate acquired by the acquiring unit 57, to an external reproducing device. In the case where the external reproducing device is the USB-DAC 4, if the first sampling rate notified from the notifying unit 58 is different from the sampling rate (corresponding to a second sampling rate 62 as described below) of a content file 30 which is being reproduced in the USB-DAC 4, the USB-DAC 4 resets internal settings, and performs re-setting based on the first sampling rate notified from the notifying unit 58.

The determining unit 59 determines whether the second sampling rate 62 which is held in the storage unit 51 and which is the sampling rate of the content file 30 outputted from the reproducing unit 56 immediately before the reproduction instruction received by the input unit 55 is different from the first sampling rate acquired by the acquiring unit 57.

After the notifying unit 58 notifies the first sampling rate to the external reproducing device, the data control unit 60 outputs reproduction start notification data to the external reproducing device, and then outputs, for a predetermined length of time, soundless data to the external reproducing device, and further outputs the content file 30 received by the input unit 55 which is the object of the reproduction instruction to the external reproducing device.

In the case where the content file 30 has the DSD format and the external reproducing device is the USB-DAC 4, the reproduction start notification data is a trigger to cause the USB-DAC 4 to perform a muting operation for a predetermined length of time. Herein, the format and content of the reproduction start notification data are not particularly limited as long as such data can be a trigger to cause the USB-DAC 4 to perform a muting operation for a predetermined length of time. The format and content of soundless data corresponding to the predetermined length of time are not particularly limited as long as such data is capable of preventing content files 30 which are music files from being abruptly outputted to the outside after the above-described muting operation of the USB-DAC 4 finishes. It may be preferable that the predetermined length of time for which soundless data should continue to be outputted is longer than the predetermined length of time which is the duration of the muting operation of the USB-DAC 4, and the predetermined length of time for which soundless data should continue to be outputted needs only to be appropriately selected so as to satisfy this condition. For example, the predetermined length of time is longer than 0 but shorter than several seconds (for example, between 0.1 seconds and 2 seconds). Details of examples of the reproduction start notification data and the soundless data will be described below.

In this case, it may be preferable that, if the determining unit 59 determines that the first sampling rate and the second sampling rate are different from each other, after the notifying unit 58 notifies the first sampling rate, the data control unit 60 outputs the reproduction start notification data to the external reproducing device, and then outputs the soundless data corresponding to the predetermined length of time to the external reproducing device, and further outputs the content file 30 received by the input unit 55, which is the object of the reproduction instruction, to the external reproducing device.

Also, it may be preferable that the input unit 55 receives a setting instruction related to the predetermined length of time for which the soundless data should be outputted, and that the data control unit 60 outputs soundless data corresponding to the same length of time as that based on the setting instruction received by the input unit 55, to the external reproducing device. More preferably, the input unit 55 may present candidates for the length of time for which the soundless data should be outputted, and receive a user's candidate selection instruction.

Further, while outputting the content file 30, the data control unit 60 outputs offset data representing the data output position of the content file 30 which is being outputted, together with the content file. In this case, it may be preferable that the offset data represents the data output position of the data excluding the soundless data.

Further, while outputting the content file 30, the data control unit 60 outputs time stamp data representing the data reproduction time of the content file 30, together with the content file, and it may be preferable that the time stamp data represent the data reproduction time of the content data plus the soundless data.

The storage unit 51 has the function of at least temporarily storing a variety of data. The storage unit 51 has the storing unit 61, and the storing unit 61 stores content files 30 and the content registration list 31. The content files 30 which can be stored in the storing unit 61 of the storage device 1 of the present embodiment may preferably include content files 30 having the DSD format. The content registration list 31 includes the file names of the content files and the content information in association with each other. The content information includes the information representing the details of the content data and attribute such as the storage locations for the content files (for example, URIs), content names, content sizes, and the like. Also, as described above, the storage unit 51 stores the second sampling rate 62 which is the sampling rate of the content file 30 outputted from the reproduction unit 56 immediately before the reproduction instruction received by the input unit 55.

The operation input unit 52 receives a variety of data inputted to the storage device 1, and outputs the variety of input data to the control unit 50 or stores the variety of input data in the storage unit 51. The reproduction output unit 53 which also functions as a reproducing unit outputs the content file 30 outputted from the reproducing unit 56, to the external reproducing device such as the USB-DAC 4. The communication unit 54 which also functions as an input unit transmits a variety of data of the control unit 50 and the storage unit 51 to the external reproducing device including the communication device 3 through the LAN 8, and receives a variety of data from the communication device 3 and the like.

In the above-described configuration, the control unit 50, and the input unit 55 and the reproducing unit 56 included in the control unit 50 are mainly configured by the CPU 20, and the storage unit 51 is mainly configured by the ROM 21, the RAM 22, and the HDD unit 26, and the operation input unit 52 is mainly configured by the input/output device 23, and the reproduction output unit 53 is mainly configured by the input/output device 23, and the communication unit 54 is mainly configured by the network interface 25. The operations of the individual functional units of the storage device 1 shown in FIG. 4 will be described below in detail.

### (Data Structure of Content File)

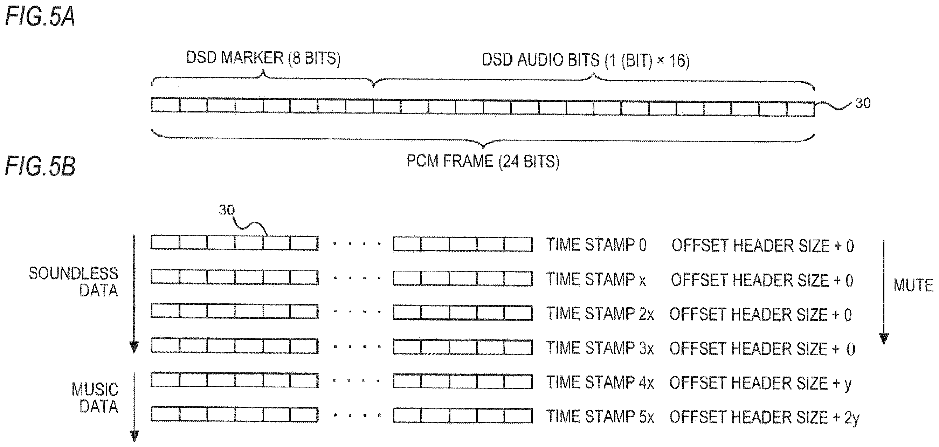

FIGS. 5A and 5B illustrate the data structure of a content file having the DoP format.

The DSD decoder unit 47 configuring the reproducing unit 56 of the storage device 1 of the present embodiment outputs a content file 30 having the DoP format as shown in FIG. 5A. Each frame of the content file 30 having the DoP format is composed of 24 bits. Since each frame of PCM data defined in the USB standard is composed of 24 bits, each frame of the content file is based on the PCM data format. In data of 24 bits, the high-order 8 bits constitutes a DSD marker, and the 8 bits constituting the DSD marker include information on the content file 30 having the DSD format. The low-order 16 bits are DSD audio bits. Content data of the DSD format is sequentially stored from high-order bits in the low-order 16 bits in the DoP format.

In the case where the reproducing unit 56 outputs the content file 30 in response to a reproduction instruction received by the input unit 55, the DSD parser unit 46 configuring the data control unit 60 of the storage device 1 of the present embodiment instructs the DSD decoder unit 47 to insert soundless data as shown in FIG. 5B into the beginning of the content file, and the DSD decoder unit 47 outputs soundless data based on the instruction from the DSD parser unit 46. The soundless data is the data that DSD audio bit pattern "0x69" representing silence is set in all the DSD audio bits of the DoP format shown in FIG. 5A. Based on the setting instruction received by the input unit 55 and related to the predetermined length of time for which soundless data should be outputted, the DSD parser unit 46 outputs soundless data corresponding to the number of frames (in the example shown in FIG. 5B, four frames) corresponding to the length based on the setting instruction.

When outputting the content file 30, the DSD parser unit 46 outputs offset data representing the data output position of the content file 30 which is being currently outputted, and time stamp data representing the data reproduction time of the content file 30.

As shown in FIG. 5B, the time stamp data which the DSD parser unit 46 outputs is time stamp data related to data reproduction time including the time for reproducing the soundless data for a muting operation. In FIG. 5B, "x" represents the reproduction time of one frame. Meanwhile, the offset data which the DSD parser unit 46 outputs is offset data related to the output position of data excluding the soundless data. In FIG. 5B, "y" represents the number of bytes of one frame.

The reason why the time stamp data and the offset data are adjusted as described above is that if the time stamp is 0, the soundless data from the DSD parser unit 46 is not inputted to the DSD decoder unit 47. As a result, if the time stamp is 0, since the soundless data is not outputted to the USB-DAC 4, a muting operation is not performed and thus it is impossible to prevent head omission. Meanwhile, in the case where an instruction for fast forwarding or rewinding the content file 30 (a seek operation) is received from the communication device 3 or the like, since the DSD parser unit 46 specifies a seek target position based on the position of the file, it may be preferable that the offset data represent the data output position of the original content file 30 having no soundless data.

### (Operation)

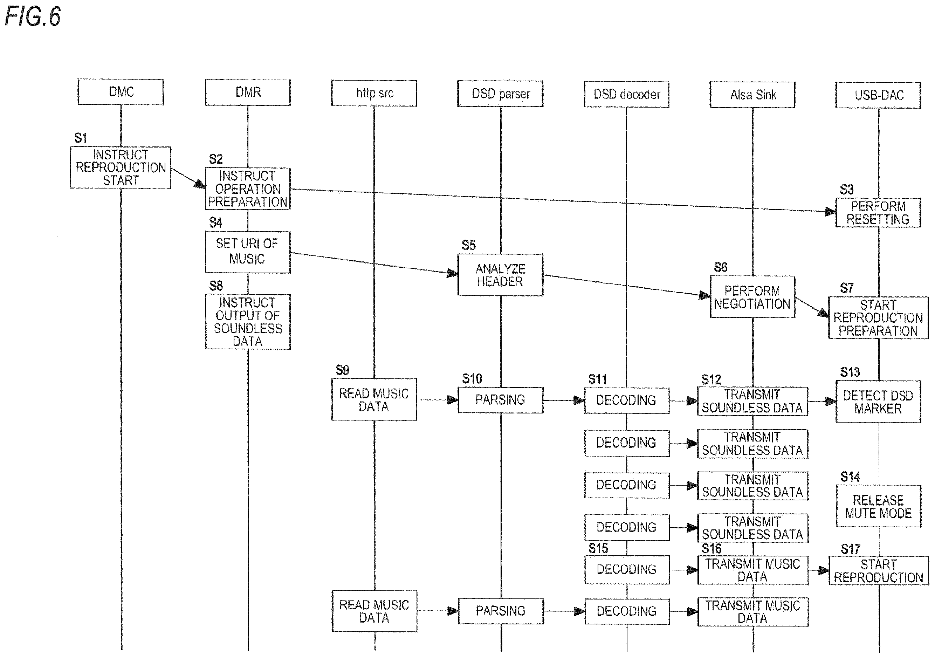

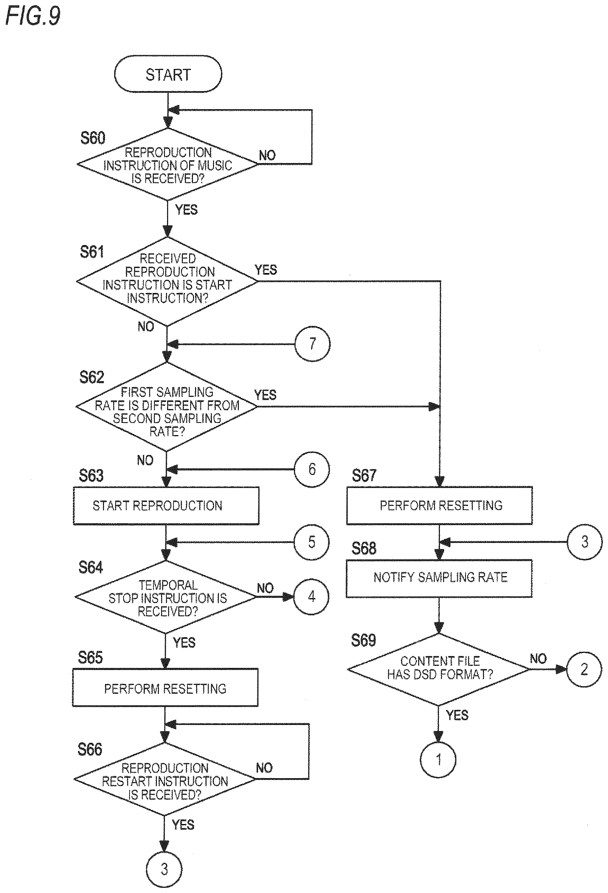

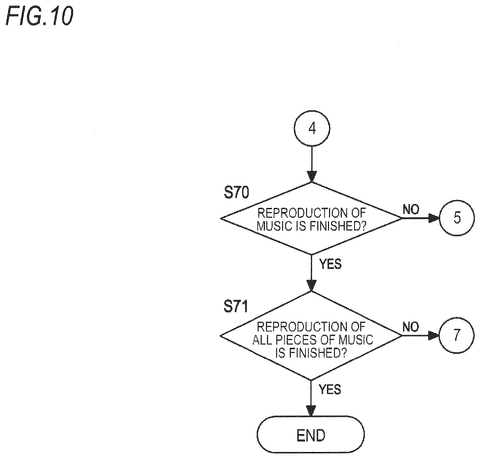

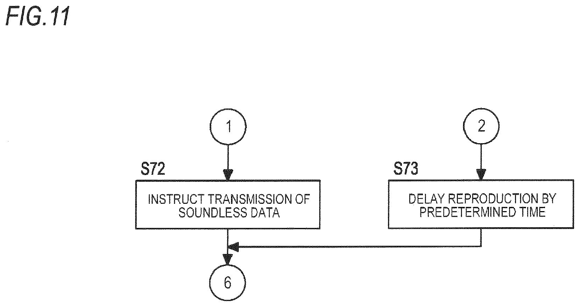

Now, the operation of the content reproducing system S of the present embodiment will be described while focusing on the operation of the storage device 1 with reference to the sequence diagrams of FIGS. 6 to 8 and the flow charts of FIGS. 9 to 11.

First, FIG. 6 is a sequence diagram for explaining an example of the operation of the storage device according to the embodiment. The operation shown in the sequence diagram of FIG. 6 is an operation at start of reproduction of a content file 30 of the DSD format.

First, in STEP S1, a reproduction instruction of a content file 30 of the DSD format is received from the communication device 3 which is a DMC, and in STEP S2, the DMR control unit 44 of the DMR unit 41 switches the http src unit 45, the DSD parser unit 46, the DSD decoder unit 47, and the Alsa Sink unit 48 (hereinafter, referred to generally as the pipeline of the DMR unit 41) to an operation preparation state. If the pipeline of the DMR unit 41 becomes the operation preparation state, in STEP S3, the USB-DAC 4 performs resetting.

In STEP S4, according to control of the DMR control unit 44, the http src unit 45 sets the URI of the reception object music file (the content file 30), and in STEP S5, the DSD parser unit 46 analyzes the header portion of the content file 30 which is the object of the reproduction instruction, thereby acquiring its sampling rate. In STEP S6, the Alsa Sink unit 48 performs a negotiation operation based on the USB standard with the USB-DAC 4, and notifies the sampling rate acquired in STEP S5 by the DSD parser unit 46, and a channel and a format acquired by data exchange with the DMC 43, to the USB-DAC 4. In STEP S7, based on the sampling rate and the like of the content file 30 which is the object of the reproduction instruction obtained as the result of the negotiation with the Alsa Sink unit 48 in STEP S6, the USB-DAC 4 starts a reproduction preparing operation.

In STEP S8, the DMR control unit 44 instructs the DSD parser unit 46 to output soundless data corresponding to a predetermined length of time. In STEP S9, the http src unit 45 reads the content file 30 from the DMS unit 40, and in STEP S10, the DSD parser unit 46 parses the content file 30. Herein, since the DSD parser unit 46 has been instructed to output soundless data corresponding to the predetermined length of time in STEP S8 by the DMR control unit 44, in STEP S10, the DSD parser unit 46 outputs soundless data to the DSD decoder unit 47 at the next stage. In STEP S11, the DSD decoder unit 47 performs a decoding operation. The data of the DoP format which is the result of the decoding is soundless data.

In STEP S12, the Alsa Sink unit 48 transmits the soundless data to the USB-DAC 4, and in STEP S13, the USB-DAC 4 detects a DSD marker included in the soundless data, and starts a muting operation. Therefore, the first transmission data of the soundless data of the DoP format corresponds to reproduction start notification data.

Thereafter, the DSD decoder unit 47 decodes soundless data corresponding to the number of frames corresponding to the predetermined length of time, and the Alsa Sink unit 48 transmits the decoded soundless data to the USB-DAC 4. In the predetermined length of time for which the soundless data is transmitted, the USB-DAC 4 finishes the muting operation for a predetermined length of time as shown in STEP S14. Since the predetermined length of time for which the soundless data is transmitted has been set so as to be longer than the predetermined length of time of the muting operation of the USB-DAC 4, even after the muting operation finishes, the transmission of the soundless data is performed.

Thereafter, in STEP S15, the DSD decoder unit 47 decodes music data of the DoP format, and in STEP S16, that decoded music data is transmitted to the USB-DAC 4 by the Alsa Sink unit 48, and in STEP S17, the USB-DAC 4 starts to reproduce the music data.

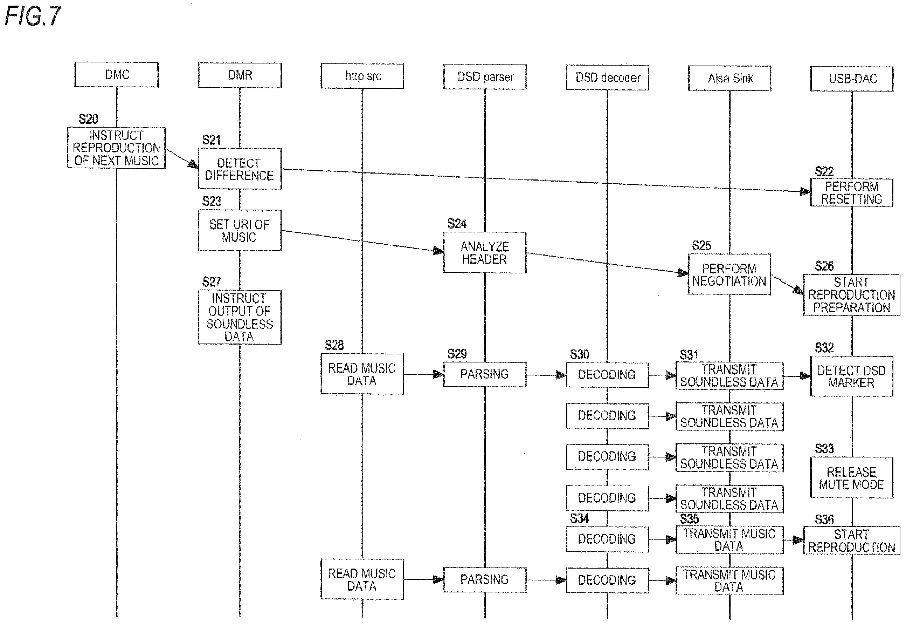

FIG. 7 is a sequence diagram for explaining another example of the operation of the storage device of the embodiment. The operation shown in the sequence diagram of FIG. 7 is an operation at reproduction of content files 30 having different sampling rates. Specifically, in the case of performing the operation of consecutively reproducing a plurality of content files 30, the sampling rate of the next reproduction object content file 30 is different from that of the content file 30 which is currently being reproduced or almost came to the end of reproduction. The operation shown in the sequence diagram of FIG. 7 is performed to reproduce the next reproduction object content file 30 in this case.

Operations of FIG. 7 and FIGS. 9 to 11 which the storage device 1 performs in the case of consecutively reproducing a plurality of contents are based on the Universal Plug and Play/Audio Visual (UPnP/AV) protocol. However, the storage device 1 of the present embodiment may operate based on the OpenHome standard. In this case, the DMR unit 41 of the storage device 1 receives a list of pieces of music to be reproduced in a playlist form, a repeat/shuffle play flag, and the like from the DMC 43, and an OpenHome control unit (not shown in FIG. 3) of the DMR unit 41 stores the playlist, and instructs reproduction of the next music in place of the DMC 43. Even in an operation based on the OpenHome standard, it is possible to perform the same operation as that of FIG. 7.

First, in STEP S20, the communication device 3 which is a DMC instructs the reproduction of the next reproduction object content file 30.

In STEP S21, the DMR unit 41 analyzes the header portion of the content file 30 which is the object of the reproduction instruction, thereby acquiring information on its sampling rate, channel, and format. As a result, the DMR control unit 44 detects the difference of the sampling rate of the next reproduction object content file 30 from that of the current reproduction object content file 30. In this case, the DMR control unit 44 switches the pipeline of the DMR unit 41 to the operation preparation state, and if the pipeline of the DMR unit 41 becomes the operation preparation state, in STEP S22, the USB-DAC 4 performs resetting.

Thereafter, in STEPS S23 to S36, the same operations as those of STEPS S4 to S17 of FIG. 6 are performed.

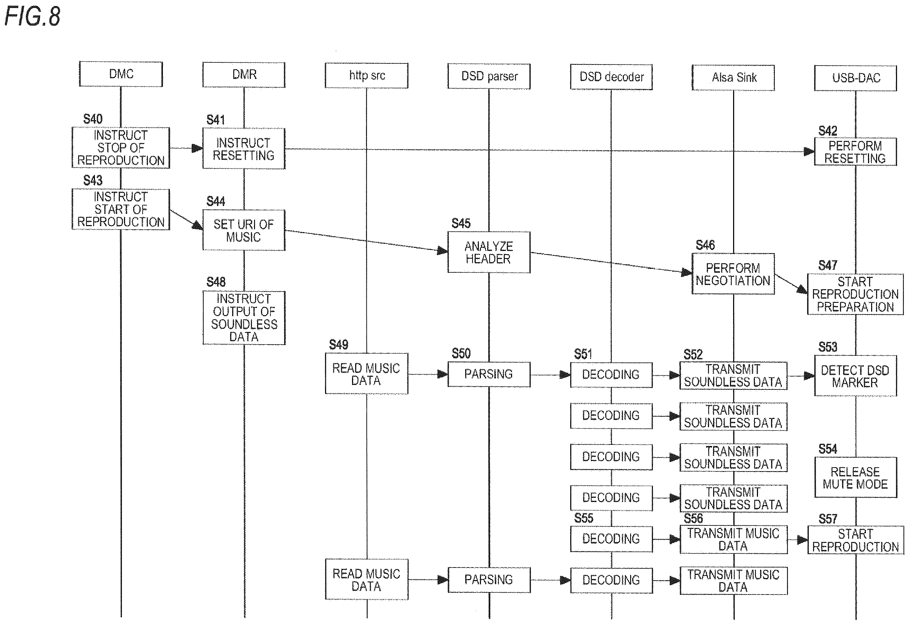

FIG. 8 is a sequence diagram for explaining a further example of the operation of the storage device according to the embodiment. The operation shown in the sequence diagram of FIG. 8 corresponds to the case where a reproduction stop or pause instruction for the current reproduction object content file 30 is issued and then a reproduction restart instruction for the content file 30 is issued.

First, in STEP S40, the communication device 3 which is a DMC instructs stop of reproduction of the current reproduction object content file 30, and in STEP S41, the DMR control unit 44 of the DMR unit 41 resets the pipeline of the DMR unit 41, and if the pipeline of the DMR unit 41 is reset, in STEP S42, the USB-DAC 4 performs re-setting.

Thereafter, in STEP S43, the communication device 3 which is a DMC instructs restart of reproduction of the content file 30.

Thereafter, in STEPS S44 to S57, the same operations as those of STEPS S4 to S17 of FIG. 6 are performed.

Now, the operation of the storage device 1 of the present embodiment will be described with reference to the flow charts of FIGS. 9 to 11.

First, in STEP S60, the input unit 55 waits for a reproduction instruction of a content file 30 which is a music file, inputted from the communication device 3 through the communication unit 54, and if the input unit 55 receives a reproduction instruction, the program proceeds to STEP S61.

In STEP S61, the data control unit 60 determines whether the content file 30 is being reproduced, in other words, whether the reproduction instruction received in STEP S60 by the input unit 55 is an instruction for starting reproduction of the content file 30. If it is determined that the reproduction instruction is an instruction for staring reproduction, the program proceeds to STEP S67, whereas if it is determined that the reproduction instruction is not an instruction for starting reproduction, the program proceeds to STEP S62.

In STEP S62, the acquiring unit 57 of the reproducing unit 56 acquires the sampling rate of the content file 30 which is the object of the reproduction instruction received in STEP S60, as a first sampling rate, and the determining unit 59 determines whether the first sampling rate is different from a second sampling rate held in the storage unit 51. If it is determined that the sampling rates are different, the program proceeds to STEP S67, whereas if it is determined that the sampling rates are the same, the program proceeds to STEP S63.

In STEP S63, the reproducing unit 56 outputs the content file 30 which is the object of the reproduction instruction, to the USB-DAC 4 which is an external reproducing device, thereby starting reproduction of the content file 30.

In STEP S64, it is determined whether the input unit 55 receives an instruction for temporarily stopping the current reproduction object content file 30 from the communication device 3 through the communication unit 54. If it is determined that the input unit 55 receives it, the program proceeds to STEP S65, whereas if it is determined that the input unit 55 does not receive it, the program proceeds to STEP S70.

In STEP S65, the data control unit 60 performs the operation of resetting the whole of the reproducing unit 56, and in STEP S66, the input unit 55 waits for a reproduction restart instruction of the content file 30, which is inputted from the communication device 3 through the communication unit 54. If the reproduction restart instruction is received, the program proceeds to STEP S68.

In STEP S67, the data control unit 60 performs the operation of resetting the whole of the reproducing unit 56, and in STEP S68, the notifying unit 58 notifies the first sampling rate to the USB-DAC 4 which is an external reproducing device. In STEP S69, the data control unit 60 checks whether the content file 30 which is the object of the reproduction instruction has the DSD format. If it is checked that the content file 30 has the DSD format, the program proceeds to STEP S72, whereas if it is checked that the content file 30 does not have the DSD format, the program proceeds to STEP S73.

In STEP S70, the reproducing unit 56 determines whether the reproduction of the current reproduction object content file 30 has finished. If it is determined that the reproduction has finished, the program proceeds to STEP S71, whereas if it is determined that the reproduction has not yet finished, the program returns to STEP S64. In STEP S71, it is determined whether the reproduction of all of the content files 30 which are the objects of the reproduction instruction received in STEP S60 has finished, that is, whether the reproduction of all of the content files 30 which are consecutive reproduction objects included in an album format has finished. If it is determined that the reproduction has finished, the program finishes, whereas if it is determined that the reproduction has not yet finished, the program returns to STEP S62.

In STEP S72, the data control unit 60 outputs soundless data as reproduction start notification data to the USB-DAC 4 which is an external reproducing device, and then outputs soundless data corresponding to a predetermined length of time to the USB-DAC 4. In STEP S73, the data control unit 60 temporarily stops the operation of the whole of the reproducing unit 56, thereby delaying the reproducing operation by the predetermined duration. After STEP S72 or STEP S73, the program returns to STEP S63.

The operation of STEP S73 is the conventional techniques performed in order to start the reproduction of a content file 30 after waiting for the USB-DAC 4 to change settings in the case where first sampling rate and second sampling rate are different. Therefore, the delay time for the reproducing operation is set longer than the time required for the USB-DAC 4 to change settings.

### (Effects)

As described above, in the storage device 1 of the present embodiment, after the notifying unit 58 notifies the first sampling rate, the data control unit 60 outputs reproduction start notification data to the USB-DAC 4 which is an external reproducing device, then outputs soundless data corresponding to a predetermined length of time to the USB-DAC 4, and thereafter, outputs a content file 30 which is the object of a reproduction instruction received by the input unit 55, to the USB-DAC 4. Therefore, it is possible to surely output soundless data to the USB-DAC 4 while the USB-DAC 4 performs a muting operation, and thereafter, it is possible to reproduce the content file 30 by outputting the content file 30 to the USB-DAC 4. Therefore, it is possible to surely reproduce content files 30 of the DSD format, without causing the so-called head omission.

Accordingly, in the present embodiment, it is possible to implement the storage device 1 capable of preventing head omission in outputting content data to an external reproducing device.

### (Modifications)

The details of the storage device 1 of the present invention are not limited to the above described embodiment, and various modifications are possible. In the above-described embodiment, the soundless data output duration is set in advance. However, for example, in the case where the durations of muting operations of USB-DACs 4 depend on the USB-DACs 4, such a soundless data output duration may be set according to each USB-DAC 4.

As examples of the method of setting a soundless data output duration for each USB-DAC 4 as described above, the following methods may be employed. When a USB-DAC 4 is connected to the storage device 1, the vendor ID and product ID of the USB-DAC 4 are stored in the storage device 1 in the negotiation process between the storage device 1 and the USB-DAC 4. The vendor ID and the like are associated with the set duration and these items are stored in a table. Thereafter, when the USB-DAC 4 is connected again, the time corresponding to the vendor ID of the USB-DAC 4 connected again is set by referring to the table based on the vendor ID. Alternatively, the table may be stored in the above-described external server 11 such that the storage device 1 can access the external server 11 and acquire the table, at predetermined intervals.

Also, the present invention can be applied to a reproduction process device for receiving a reproduction instruction of content data stored in an external storage device operating as a DMS and outputting the content data to the external reproducing device based on the received reproduction instruction.

Further, in the above-described embodiment, the programs for operating the storage device 1 is stored in and provided from the ROM 21, the HDD unit 26, and the like. However, the programs may be stored in a recording medium such as a Digital Versatile Disc (DVD), a USB flash memory device, or a memory card such that it is possible to establish a connection with the recording medium such as a DVD by the USB interface 23c and the like and load the programs into the storage device 1 and execute the programs. Also, the programs may be stored in the external server 11 on the WAN 10, such that it is possible to load the programs into the storage device 1 through the network interface 25 and execute the programs. Also, in each embodiment described above, the storage device 1 is configured by a plurality of hardware components. However, the CPU 20 may implement operations of some of the hardware components by executing programs. Further, in each embodiment described above, the HDD unit 26 is used. However, a storage medium other than the HDD unit 26, for example, a well-known storage medium such as a Solid State Drive (SSD) device or a memory card can also be used.

## Claims

1. A reproduction process device comprising:
an input unit (55) configured to receive a reproduction instruction of content data; and
a reproducing unit (56) configured to output the content data in a DoP format to an external reproducing device (2,4) through a Digital-to-Analog Converter, DAC, (4) connectable to a Universal Serial Bus, USB, port based on the reproduction instruction received by the input unit (55), wherein the DoP format is a Direct Stream Digital, DSD, Audio over PCM flames format,
wherein the reproducing unit (56) includes:
an acquiring unit (57) configured to acquire a sampling rate of the content data having the DoP format which is an object of the reproduction instruction received by the input unit (55), as a first sampling rate;
a notifying unit (58) configured to notify the first sampling rate acquired by the acquiring unit (57) to the external reproducing device (2,4); and
a data control unit (60) configured to output reproduction start notification data to the external reproducing device (2,4) for causing the external reproducing device (2, 4) to start a muting operation after the notifying unit (58) notifies the first sampling rate, then output soundless data of DoP format corresponding to a predetermined length of time to the external reproducing device (2,4), and thereafter, output the content data having the DoP format which is the object of the reproduction instruction received by the input unit (55), to the external reproducing device (2,4), and
wherein the data control unit (60) outputs offset data representing a data output position of the content data which is being outputted, together with the content data, and
wherein the offset data represents the data output position of the data excluding the soundless data.

2. The reproduction process device according to claim 1,
wherein the reproducing unit (56) further includes:
a storage unit (51) configured to store a sampling rate of content data outputted from the reproducing unit (56) immediately before the reproduction instruction received by the input unit (55), as a second sampling rate; and
a determining unit (59) configured to determine whether the first sampling rate and the second sampling rate are different from each other, and
wherein if the determining unit (59) determines that the first sampling rate and the second sampling rate are different, the data control unit (60) outputs the reproduction start notification data to the external reproducing device (2,4) after the notifying unit (58) notifies the first sampling rate, then outputs the soundless data corresponding to the predetermined length of time to the external reproducing device (2,4), and thereafter, outputs the content data which is the object of the reproduction instruction received by the input unit (55), to the external reproducing device (2,4).

3. The reproduction process device according to claim 1 or 2,
wherein when the input unit (55) receives a reproduction stop instruction of currently reproduced content data, the data control unit (60) performs an operation of resetting the entire reproducing unit (56), and
wherein when the input unit (55) receives a reproduction restart instruction of the content data, the data control unit (60) outputs the reproduction start notification data to the external reproducing device (2,4) after the notifying unit (58) notifies the first sampling rate, then outputs the soundless data corresponding to the predetermined length of time to the external reproducing device (2,4), and thereafter, outputs, to the external reproducing device (2,4), the content data which is an object of the reproduction restart instruction received by the input unit (55).

4. The reproduction process device according to any one of claims 1 to 3,
wherein the input unit (55) receives a setting instruction related to the predetermined length of time, and
wherein the data control unit (60) outputs, to the external reproducing device (2, 4), the soundless data corresponding to the predetermined length of time whose length is based on the setting instruction received by the input unit (55).

5. The reproduction process device according to claim 4,
wherein the input unit (55) presents candidates for the predetermined length of time and receives one of the presented candidates as the setting instruction.

6. The reproduction process device according to any one of claims 1 to 5,
wherein the data control unit (60) outputs time stamp data representing a data reproduction time of the content data which is being outputted, together with the content data, and
wherein the time stamp data represents the data reproduction time of the content data plus the soundless data.

7. The reproduction process device according to any one of claims 1 to 6,
wherein the data control unit (60) checks whether the content data which is the object of the reproduction instruction received by the input unit (55) has a predetermined format, and
wherein if checking that the content data has the predetermined format, the data control unit (60) outputs the reproduction start notification data to the external reproducing device (2,4), then outputs the soundless data corresponding to the predetermined length of time to the external reproducing device (2,4), and thereafter, outputs, to the external reproducing device (2,4), the content data which is the object of the reproduction instruction received by the input unit (55).

8. The reproduction process device according to any one of claims 1 to 7,
wherein the content data is stored in an external storage device (11).

9. A storage device comprising:
a storing unit (61) configured to store the content data; and
the reproduction process device according to any one of claims 1 to 7.

10. An operation control method for a reproduction process device which includes an input unit (55) configured to receive a reproduction instruction of content data, and a reproducing unit (56) configured to output the content data in a DoP format to an external reproducing device (2,4) through a Digital-to-Analog Converter, DAC, (4) connectable to a Universal Serial Bus, USB, port based on the reproduction instruction received by the input unit (55), wherein the DoP format is a Direct Stream Digital, DSD, Audio over PCM flames format, the method comprising:
acquiring a sampling rate of the content data having the DoP format which is an object of the reproduction instruction received by the input unit (55), as a first sampling rate;
notifying the acquired first sampling rate to the external reproducing device (2,4); and
after notification of the first sampling rate, outputting reproduction start notification data to the external reproducing device (2,4) for causing the external reproducing device (2, 4) to start a muting operation, then outputting soundless data of DoP format corresponding to a predetermined length of time to the external reproducing device (2,4), and thereafter, outputting the content data having the DoP format which is the object of the reproduction instruction received by the input unit (55), to the external reproducing device (2,4), and
outputting offset data representing a data output position of the content data which is being outputted, together with the content data, and
wherein the offset data represents the data output position of the data excluding the soundless data.

11. A program which can be executed by a computer including an input unit (55) configured to receive a reproduction instruction of content data, and a reproducing unit (56) configured to output the content data in a DoP format to an external reproducing device (2,4) through a Digital-to-Analog Converter, DAC, (4) connectable to a Universal Serial Bus, USB, port based on the reproduction instruction received by the input unit (55), wherein the DoP format is a Direct Stream Digital, DSD, Audio over PCM flames format, the program when executed by the computer, causing the reproducing unit (56) of the computer to function as:
an acquiring unit (57) configured to acquire a sampling rate of the content data having the DoP format which is an object of the reproduction instruction received by the input unit (55), as a first sampling rate;
a notifying unit (58) configured to notify the first sampling rate acquired by the acquiring unit (57) to the external reproducing device (2,4); and
a data control unit (60) configured to output reproduction start notification data to the external reproducing device (2,4) for causing the external reproducing device (2, 4) to start a muting operation after the notifying unit (58) notifies the first sampling rate, then output soundless data of DoP format corresponding to a predetermined length of time to the external reproducing device (2,4), and thereafter, output the content data having the DoP format which is the object of the reproduction instruction received by the input unit (55), to the external reproducing device (2,4), and
wherein the data control unit (60) outputs offset data representing a data output position of the content data which is being outputted, together with the content data, and
wherein the offset data represents the data output position of the data excluding the soundless data.

12. A computer-readable data carrier comprising the program according to claim 11.

## Patentansprüche

1. Wiedergabeverarbeitungsvorrichtung, aufweisend:
eine Eingabeeinheit (55), die so konfiguriert ist, dass sie eine Inhaltsdaten-Wiedergabeanweisung empfängt; und
eine Wiedergabeeinheit (56), die so konfiguriert ist, dass sie die Inhaltsdaten in einem DoP-Format an eine externe Wiedergabevorrichtung (2, 4) über einen Digital/AnalogWandler, DAC, (4) ausgibt, der an einen USB-Anschluss anschließbar ist, und zwar basierend auf der von der Eingabeeinheit (55) empfangenen Wiedergabeanweisung, wobei es sich bei dem DoP-Format um ein Format des Typs Direct Stream Digital, DSD, Audio over PCM Frames handelt,
wobei die Wiedergabeeinheit (56) umfasst:
eine Erfassungseinheit (57), die so konfiguriert ist, dass sie eine Abtastrate der Inhaltsdaten im DoP-Format, die Gegenstand der von der Eingabeeinheit (55) empfangenen Wiedergabeanweisung sind, als erste Abtastrate erfasst;
eine Mitteilungseinheit (58), die so konfiguriert ist, dass sie die erste Abtastrate, die von der Erfassungseinheit (57) erfasst wird, der externen Wiedergabevorrichtung (2, 4) mitteilt; und
eine Datensteuereinheit (60), die so konfiguriert ist, dass sie Wiedergabestart-Mitteilungsdaten an die externe Wiedergabevorrichtung (2, 4) ausgibt, um zu bewirken, dass die externe Wiedergabevorrichtung (2, 4) einen stillen Betrieb aufnimmt, nachdem die Mitteilungseinheit (58) die erste Abtastrate mitgeteilt hat, dann nicht-auditive Daten im DoP-Format entsprechend einer vorbestimmten Zeitdauer an die externe Wiedergabevorrichtung (2, 4) ausgibt und danach die Inhaltsdaten im DoP-Format, die Gegenstand der von der Eingabeeinheit (55) empfangenen Wiedergabeanweisung sind, an die externe Wiedergabevorrichtung (2, 4) ausgibt, und
wobei die Datensteuereinheit (60) Offset-Daten, die eine Datenausgabeposition der Inhaltsdaten darstellen, die momentan ausgegeben werden, zusammen mit den Inhaltsdaten ausgibt, und
wobei die Offset-Daten die Datenausgabeposition der Daten mit Ausnahme der nicht-auditiven Daten darstellen.

2. Wiedergabeverarbeitungsvorrichtung nach Anspruch 1, wobei die Wiedergabeeinheit (56) zusätzlich enthält:
eine Speichereinheit (51), die so konfiguriert ist, dass sie eine Abtastrate von Inhaltsdaten, die von der Wiedergabeeinheit (56) unmittelbar vor der von der Eingabeeinheit (55) empfangenen Wiedergabeanweisung ausgegeben werden, als zweite Abtastrate speichert; und
eine Bestimmungseinheit (59), die konfiguriert ist, um zu bestimmen, ob die erste Abtastrate und die zweite Abtastrate voneinander verschieden sind, und
wobei, wenn die Bestimmungseinheit (59) bestimmt, dass die erste Abtastrate und die zweite Abtastrate verschieden sind, die Datensteuereinheit (60) die Wiedergabestart-Mitteilungsdaten an die externe Wiedergabevorrichtung (2, 4) ausgibt, nachdem die Mitteilungseinheit (58) die erste Abtastrate mitgeteilt hat, dann die nicht-auditiven Daten entsprechend der vorbestimmten Zeitdauer an die externe Wiedergabevorrichtung (2, 4) ausgibt und danach die Inhaltsdaten, die Gegenstand der von der Eingabeeinheit (55) empfangenen Wiedergabeanweisung sind, an die externe Wiedergabevorrichtung (2, 4) ausgibt.

3. Wiedergabeverarbeitungsvorrichtung nach Anspruch 1 oder 2,
wobei, wenn die Eingabeeinheit (55) eine Wiedergabestoppanweisung für aktuell wiedergegebene Inhaltsdaten empfängt, die Datensteuereinheit (60) einen Vorgang des Rückstellens der gesamten Wiedergabeeinheit (56) durchführt, und
wobei, wenn die Eingabeeinheit (55) eine Wiedergabe-Neustartanweisung für Inhaltsdaten empfängt, die Datensteuereinheit (60) die Wiedergabestart-Mitteilungsdaten an die externe Wiedergabevorrichtung (2, 4) ausgibt, nachdem die Mitteilungseinheit (58) die erste Abtastrate mitgeteilt hat, dann die nicht-auditiven Daten entsprechend der vorbestimmten Zeitdauer an die externe Wiedergabevorrichtung (2, 4) ausgibt und danach an die externe Wiedergabevorrichtung (2, 4) die Inhaltsdaten ausgibt, die Gegenstand der von der Eingabeeinheit (55) empfangenen Wiedergabe-Neustartanweisung sind.

4. Wiedergabeverarbeitungsvorrichtung nach einem der Ansprüche 1 bis 3,
wobei die Eingabeeinheit (55) eine Einstellanweisung bezüglich der vorbestimmten Zeitdauer empfängt, und
wobei die Datensteuereinheit (60) an die externe Wiedergabevorrichtung (2, 4) die nicht-auditiven Daten entsprechend der vorbestimmten Zeitdauer ausgibt, deren Länge auf der von der Eingabeeinheit (55) empfangenen Einstellanweisung basiert.

5. Wiedergabeverarbeitungsvorrichtung nach Anspruch 4,
wobei die Eingabeeinheit (55) Möglichkeiten für die vorbestimmte Zeitdauer präsentiert und eine der präsentierten Möglichkeiten als Einstellanweisung erhält.

6. Wiedergabeverarbeitungsvorrichtung nach einem der Ansprüche 1 bis 5,
wobei die Datensteuereinheit (60) Zeitstempeldaten, die eine Datenwiedergabezeit der Inhaltsdaten darstellen, die momentan ausgegeben werden, zusammen mit den Inhaltsdaten ausgibt, und
wobei die Zeitstempeldaten die Datenwiedergabezeit der Inhaltsdaten plus der nicht-auditiven Daten darstellen.

7. Wiedergabeverarbeitungsvorrichtung nach einem der Ansprüche 1 bis 6,
wobei die Datensteuereinheit (60) überprüft, ob die Inhaltsdaten, die Gegenstand der von der Eingabeeinheit (55) empfangenen Wiedergabeanweisung sind, ein vorbestimmtes Format haben, und
wobei, wenn die Überprüfung ergibt, dass die Inhaltsdaten das vorbestimmte Format haben, die Datensteuereinheit (60) die Wiedergabestart-Mitteilungsdaten an die externe Wiedergabevorrichtung (2, 4) ausgibt, dann die nicht-auditiven Daten entsprechend der vorbestimmten Zeitdauer an die externe Wiedergabevorrichtung (2, 4) ausgibt und danach an die externe Wiedergabevorrichtung (2, 4) die Inhaltsdaten ausgibt, die Gegenstand der von der Eingabeeinheit (55) empfangenen Wiedergabeanweisung sind.

8. Wiedergabeverarbeitungsvorrichtung nach einem der Ansprüche 1 bis 7,
wobei die Inhaltsdaten in einer externen Speicherungsvorrichtung (11) gespeichert werden.

9. Speicherungsvorrichtung, aufweisend:
eine Speichereinheit (61), die zur Speicherung von Inhaltsdaten konfiguriert ist; und
die Wiedergabeverarbeitungsvorrichtung nach einem der Ansprüche 1 bis 7.

10. Betriebssteuerungsverfahren für eine Wiedergabeverarbeitungsvorrichtung, die eine Eingabeeinheit (55), die so konfiguriert ist, dass sie eine Wiedergabeanweisung für Inhaltsdaten empfängt, und eine Wiedergabeeinheit (56) enthält, die so konfiguriert ist, dass sie die Inhaltsdaten in einem DoP-Format an eine externe Wiedergabevorrichtung (2) über einen Digital/Analog-Wandler, DAC, (4) ausgibt, der an einen USB-Anschluss anschließbar ist, und zwar basierend auf der von der Eingabeeinheit (55) empfangenen Wiedergabeanweisung, wobei es sich bei dem DoP-Format um ein Format des Typs Direct Stream Digital, DSD, Audio over PCM Frames handelt, wobei das Verfahren umfasst:
Erfassen einer Abtastrate der Inhaltsdaten im DoP-Format, die Gegenstand der von der Eingabeeinheit (55) empfangenen Wiedergabeanweisung sind, als erste Abtastrate;
Mitteilung der erfassten ersten Abtastrate an die externe Wiedergabevorrichtung (2, 4); und
nach Mitteilung der ersten Abtastrate, Ausgeben von Wiedergabestart-Mitteilungsdaten an die externe Wiedergabevorrichtung (2, 4), um die externe Wiedergabevorrichtung (2, 4) zu veranlassen, einen stillen Betrieb aufzunehmen, dann Ausgeben von nicht-auditiven Daten im DoP-Format entsprechend einer vorbestimmten Zeitdauer an die externe Wiedergabevorrichtung (2, 4), und danach Ausgeben der Inhaltsdaten im DoP-Format, die Gegenstand der von der Eingabeeinheit (55) empfangenen Wiedergabeanweisung sind, an die externe Wiedergabevorrichtung (2, 4), und
Ausgeben von Offset-Daten, die eine Datenausgabeposition der Inhaltsdaten darstellen, die momentan ausgegeben werden, zusammen mit den Inhaltsdaten, und
wobei die Offset-Daten die Datenausgabeposition der Daten mit Ausnahme der nicht-auditiven Daten darstellen.

11. Programm, das von einem Computer ausgeführt werden kann, mit einer Eingabeeinheit (55), die so konfiguriert ist, dass sie eine Wiedergabeanweisung für Inhaltsdaten empfängt, und einer Wiedergabeeinheit (56), die so konfiguriert ist, dass sie die Inhaltsdaten in einem DoP-Format über einen Digital/Analog-Wandler, DAC, (4), der an einen USB-Anschluss anschließbar ist, an eine externe Wiedergabevorrichtung (2, 4) ausgibt, und zwar basierend auf der von der Eingabeeinheit (55) empfangenen Wiedergabeanweisung, wobei es sich bei dem DoP-Format um ein Format des Typs Direct Stream Digital, DSD, Audio over PCM Frames handelt, wobei das Programm bei Ausführung durch den Computer die Wiedergabeeinheit (56) des Computers fungieren lässt als:
eine Erfassungseinheit (57), die so konfiguriert ist, dass sie eine Abtastrate der Inhaltsdaten im DoP-Format, die Gegenstand der von der Eingabeeinheit (55) empfangenen Wiedergabeanweisung sind, als erste Abtastrate erfasst;
eine Mitteilungseinheit (58), die so konfiguriert ist, dass sie die erste Abtastrate, die von der Erfassungseinheit (57) erfasst wird, der externen Wiedergabevorrichtung (2, 4) mitteilt; und
eine Datensteuereinheit (60), die so konfiguriert ist, dass sie Wiedergabestart-Mitteilungsdaten an die externe Wiedergabevorrichtung (2, 4) ausgibt, um zu bewirken, dass die externe Wiedergabevorrichtung (2, 4) einen stillen Betrieb aufnimmt, nachdem die Mitteilungseinheit (58) die erste Abtastrate mitgeteilt hat, dann nicht-auditive Daten im DoP-Format entsprechend einer vorbestimmten Zeitdauer an die externe Wiedergabevorrichtung (2, 4) ausgibt und danach die Inhaltsdaten im DoP-Format, die Gegenstand der von der Eingabeeinheit (55) empfangenen Wiedergabeanweisung sind, an die externe Wiedergabevorrichtung (2, 4) ausgibt, und
wobei die Datensteuereinheit (60) Offset-Daten, die eine Datenausgabeposition der Inhaltsdaten darstellen, die momentan ausgegeben werden, zusammen mit den Inhaltsdaten ausgibt, und
wobei die Offset-Daten die Datenausgabeposition der Daten mit Ausnahme der nicht-auditiven Daten darstellen.

12. Computerlesbarer Datenträger, der das Programm nach Anspruch 11 enthält.

## Revendications

1. Dispositif de traitement de reproduction comprenant :
une unité d'entrée (55) configurée pour recevoir une instruction de reproduction de données de contenu ; et
une unité de reproduction (56) configurée pour sortir les données de contenu dans un format DoP vers un dispositif de reproduction externe (2, 4) via un convertisseur numérique-analogique, DAC, (4) pouvant être connecté à un port de bus sériel universel, USB, sur la base de l'instruction de reproduction reçue par l'unité d'entrée (55), sachant que le format DoP est un format Direct Stream Digital, DSD, Audio over PCM Frames,
sachant que l'unité de reproduction (56) inclut :
une unité d'acquisition (57) configurée pour acquérir un taux d'échantillonnage des données de contenu présentant le format DoP qui sont un objet de l'instruction de reproduction reçue par l'unité d'entrée (55), en tant que premier taux d'échantillonnage ;
une unité de notification (58) configurée pour notifier le premier taux d'échantillonnage acquis par l'unité d'acquisition (57) au dispositif de reproduction externe (2, 4) ; et
une unité de commande de données (60) configurée pour sortir des données de notification de démarrage de reproduction vers le dispositif de reproduction externe (2, 4) pour faire en sorte que le dispositif de reproduction externe (2, 4) démarre un fonctionnement silencieux après que l'unité de notification (58) notifie le premier taux d'échantillonnage, puis sorte des données non sonores de format DoP correspondant à une longueur de temps prédéterminée vers le dispositif de reproduction externe (2, 4), et sorte ensuite les données de contenu présentant le format DoP qui sont l'objet de l'instruction de reproduction reçue par l'unité d'entrée (55), vers le dispositif de reproduction externe (2, 4), et
sachant que l'unité de commande de données (60) sort des données décalées représentant une position de sortie de données des données de contenu qui sont en train d'être sorties, conjointement avec les données de contenu, et
sachant que les données décalées représentent la position de sortie de données des données à l'exclusion des données non sonores.

2. Le dispositif de traitement de reproduction selon la revendication 1,
sachant que l'unité de reproduction (56) inclut en outre :
une unité de stockage (51) configurée pour stocker un taux d'échantillonnage de données de contenu sorties depuis l'unité de reproduction (56) immédiatement avant l'instruction de reproduction reçue par l'unité d'entrée (55), en tant que deuxième taux d'échantillonnage ; et
une unité de détermination (59) configurée pour déterminer si le premier taux d'échantillonnage et le deuxième taux d'échantillonnage sont différents l'un de l'autre, et
sachant que si l'unité de détermination (59) détermine que le premier taux d'échantillonnage et le deuxième taux d'échantillonnage sont différents, l'unité de commande de données (60) sort les données de notification de démarrage de reproduction vers le dispositif de reproduction externe (2, 4) après que l'unité de notification (58) notifie le premier taux d'échantillonnage, puis sort les données non sonores correspondant à la longueur de temps prédéterminée vers le dispositif de reproduction externe (2, 4), et sort ensuite les données de contenu qui sont l'objet de l'instruction de reproduction reçue par l'unité d'entrée (55), vers le dispositif de reproduction externe (2, 4).

3. Le dispositif de traitement de reproduction selon la revendication 1 ou 2,
sachant que lorsque l'unité d'entrée (55) reçoit une instruction d'arrêt de reproduction de données de contenu actuellement reproduites, l'unité de commande de données (60) effectue une opération de réinitialisation de toute l'unité de reproduction (56), et
sachant que lorsque l'unité d'entrée (55) reçoit une instruction de redémarrage de reproduction des données de contenu, l'unité de commande de données (60) sort les données de notification de démarrage de reproduction vers le dispositif de reproduction externe (2, 4) après que l'unité de notification (58) notifie le premier taux d'échantillonnage, puis sort les données non sonores correspondant à la longueur de temps prédéterminée vers le dispositif de reproduction externe (2, 4), et sort ensuite, vers le dispositif de reproduction externe (2, 4), les données de contenu qui sont un objet de l'instruction de redémarrage de reproduction reçue par l'unité d'entrée (55).

4. Le dispositif de traitement de reproduction selon l'une quelconque des revendications 1 à 3,
sachant que l'unité d'entrée (55) reçoit une instruction de réglage relative à la longueur de temps prédéterminée, et
sachant que l'unité de commande de données (60) sort, vers le dispositif de reproduction externe (2, 4), les données non sonores correspondant à la longueur de temps prédéterminée dont la longueur est basée sur l'instruction de réglage reçue par l'unité d'entrée (55).

5. Le dispositif de traitement de reproduction selon la revendication 4,
sachant que l'unité d'entrée (55) présente des candidats pour la longueur de temps prédéterminée et reçoit un des candidats présentés en tant que l'instruction de réglage.

6. Le dispositif de traitement de reproduction selon l'une quelconque des revendications 1 à 5,
sachant que l'unité de commande de données (60) sort des données d'horodatage représentant un temps de reproduction de données des données de contenu qui sont en train d'être sorties, conjointement avec les données de contenu, et
sachant que les données d'horodatage représentent le temps de reproduction de données des données de contenu ainsi que des données non sonores.

7. Le dispositif de traitement de reproduction selon l'une quelconque des revendications 1 à 6,
sachant que l'unité de commande de données (60) vérifie si les données de contenu qui sont l'objet de l'instruction de reproduction reçue par l'unité d'entrée (55) présentent un format prédéterminé, et
sachant que s'il est vérifié que les données de contenu présentent le format prédéterminé, l'unité de commande de données (60) sort les données de notification de démarrage de reproduction vers le dispositif de reproduction externe (2, 4), puis sort les données non sonores correspondant à la longueur de temps prédéterminée vers le dispositif de reproduction externe (2, 4), et sort ensuite, vers le dispositif de reproduction externe (2, 4), les données de contenu qui sont l'objet de l'instruction de reproduction reçue par l'unité d'entrée (55).

8. Le dispositif de traitement de reproduction selon l'une quelconque des revendications 1 à 7,
sachant que les données de contenu sont stockées dans un dispositif de stockage externe (11).

9. Dispositif de stockage comprenant :
une unité de stockage (61) configurée pour stocker des données de contenu ; et
le dispositif de traitement de reproduction selon l'une quelconque des revendications 1 à 7.

10. Procédé de commande de fonctionnement pour un dispositif de traitement de reproduction qui inclut une unité d'entrée (55) configurée pour recevoir une instruction de reproduction de données de contenu, et une unité de reproduction (56) configurée pour sortir les données de contenu dans un format DoP vers un dispositif de reproduction externe (2, 4) via un convertisseur numérique-analogique, DAC, (4) pouvant être connecté à un port de bus sériel universel, USB, sur la base de l'instruction de reproduction reçue par l'unité d'entrée (55), sachant que le format DoP est un format Direct Stream Digital, DSC, Audio over PCM Frames, le procédé comprenant :
l'acquisition d'un taux d'échantillonnage des données de contenu présentant le format DoP qui sont un objet de l'instruction de reproduction reçue par l'unité d'entrée (55), en tant que premier taux d'échantillonnage ;
la notification du premier taux d'échantillonnage acquis au dispositif de reproduction externe (2, 4) ; et
après la notification du premier taux d'échantillonnage, la sortie de données de notification de démarrage de reproduction vers le dispositif de reproduction externe (2, 4) pour faire en sorte que le dispositif de reproduction externe (2, 4) démarre un fonctionnement silencieux, puis la sortie de données non sonores de format DoP correspondant à une longueur de temps prédéterminée vers le dispositif de reproduction externe (2, 4), et ensuite la sortie des données de contenu présentant le format DoP qui sont l'objet de l'instruction de reproduction reçue par l'unité d'entrée (55), vers le dispositif de reproduction externe (2, 4), et
la sortie de données décalées représentant une position de sortie de données des données de contenu qui sont en train d'être sorties, conjointement avec les données de contenu, et
sachant que les données décalées représentent la position de sortie de données des données à l'exclusion des données non sonores.

11. Programme qui peut être exécuté par un ordinateur incluant une unité d'entrée (55) configurée pour recevoir une instruction de reproduction de données de contenu, et une unité de reproduction (56) configurée pour sortir les données de contenu dans un format DoP vers un dispositif de reproduction externe (2, 4) via un convertisseur numérique-analogique, DAC, (4) pouvant être connecté à un port de bus sériel universel, USB, sur la base de l'instruction de reproduction reçue par l'unité d'entrée (55), sachant que le format DoP est un format Direct Stream Digital, DSD, Audio over PCM Frames, le programme, lorsqu'il est exécuté par l'ordinateur, faisant fonctionner l'unité de reproduction (56) de l'ordinateur en tant que :
unité d'acquisition (57) configurée pour acquérir un taux d'échantillonnage des données de contenu présentant le format DoP qui sont un objet de l'instruction de reproduction reçue par l'unité d'entrée (55), en tant que premier taux d'échantillonnage ;
unité de notification (58) configurée pour notifier le premier taux d'échantillonnage acquis par l'unité d'acquisition (57) au dispositif de reproduction externe (2, 4) ; et
unité de commande de données (60) configurée pour sortir des données de notification de démarrage de reproduction vers le dispositif de reproduction externe (2, 4) pour faire en sorte que le dispositif de reproduction externe (2, 4) démarre un fonctionnement silencieux après que l'unité de notification (58) notifie le premier taux d'échantillonnage, puis sorte des données non sonores de format DoP correspondant à une longueur de temps prédéterminée vers le dispositif de reproduction externe (2, 4), et sorte ensuite les données de contenu présentant le format DoP qui sont l'objet de l'instruction de reproduction reçue par l'unité d'entrée (55), vers le dispositif de reproduction externe (2, 4), et
sachant que l'unité de commande de données (60) sort des données décalées représentant une position de sortie de données des données de contenu qui sont en train d'être sorties, conjointement avec les données de contenu, et
sachant que les données décalées représentent la position de sortie de données des données à l'exclusion des données non sonores.

12. Support de données lisible par ordinateur comprenant le programme selon la revendication 11.
